**Europäisches Patentamt**

**European Patent Office**

**Office européen des brevets**

(19)

(11) Veröffentlichungsnummer: **0 065 336**
**A1**

# EUROPÄISCHE PATENTANMELDUNG

(12)

(21) Anmeldenummer: **82200547.6**

(22) Anmeldetag: **06.05.82**

(51) Int. Cl.³: **B 60 J 1/17**

(30) Priorität: **15.05.81 DE 3119366**

(43) Veröffentlichungstag der Anmeldung: **24.11.82**
**Patentblatt 82/47**

(84) Benannte Vertragsstaaten: **DE FR GB IT SE**

(71) Anmelder: **BAYERISCHE MOTOREN WERKE Aktiengesellschaft, Postfach 40 02 40 Petuelring 130, D-8000 München 40 (DE)**

(72) Erfinder: **Stahmer, Michael, Dipl.-Ing., Ostpreussenstrasse 10, D-8057 Eching (DE)**
Erfinder: **Grubert, Hans-Walter, Ludwig Thoma Strasse 19, D-8031 Seefeld (DE)**
Erfinder: **Jenne, Otto, Elisabethstrasse 68, D-8044 Lohhof (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

(54) **Kraftfahrzeug, insbesondere Personenkraftwagen, mit wenigstens einer aussenhautbündigen Fensterscheibe.**

(57) Personenkraftwagen, dessen Türfensterrahmen (2) mit einer aussenhautbündigen Fensterscheibe (3) versehen ist, wobei längs den senkrecht und/oder waagrecht verlaufenden Scheibenrändern (3') einstückig ausgebildete, aus Metall oder Kunststoff bestehende Halterungen (4) angebracht sind. Diese hintergreifen im Abstand zur Ebene der Fensterscheibe (3) eine im Fensterrahmen (2) ausgebildete Führungsfläche (6). Zwischen dieser und dem Scheibenrand (3') befindet sich eine aus gummielastischem Material bestehende Dichtung (5), die an ihrer aussenliegenden, den Teilen des Fahrzeugaufbaus bzw. des Fensterrahmens (2) zugekehrten Umfangsseite mit einem schlauchförmigen Dichtwulst (9) versehen ist.

- 1 -

Kraftfahrzeug, insbesondere Personenkraftwagen, mit
wenigstens einer außenhautbündigen Fensterscheibe

Die Erfindung geht aus von einer außenhautbündigen
Fensterscheibe in einem Kraftfahrzeug der im Oberbegriff des Anspruches 1 angegebenen Art.

Eine derartige Führung einer außenhautbündigen Fensterscheibe ist aus der DE-PS 701 412 (Fig. 9 und 10) bekannt. Hierbei sind die Halterungen als kurze Gleitstücke ausgebildet, sowie seitlich am oben- und untenliegenden Randbereich der Fensterscheibe angeordnet
und mit dieser über durchgehende Schrauben unter Zuordnung außenliegender Scheiben verbunden. In den erwähnten beiden Figuren ist jedoch nichts über eine Abdichtung der Fensterscheibe offenbart. Ein diesbzüglicher
Hinweis ist lediglich der Beschreibung zu den Figuren
13 und 14 zu entnehmen, aus denen hervorgeht, am Randbereich der Fensterscheibe Dichtleisten aus Glas anzuordnen, die - ebenso wie die an den Ecken der Fensterscheibe befestigten Führungsstücke - in Führungsnuten
des Fahrzeugaufbaus eingreifen. Eine solche Dichtungsart erfüllt jedoch weitaus nicht die heute hinsichtlich
Dichtheit, Geräuschdämmung und Ästhetik  gestellten Anforderungen.

Ferner ist in der DE-AS 28 09 721 eine Scheibenführung
beschrieben, die aus einem oder zwei, an der Scheibenoberfläche befestigten Gleitstücken und einer sich lotrecht erstreckenden Führungsleiste besteht, in der die
Gleitstücke unter Zuordnung einer Dichtung höhenverschiebbar gleiten. Da längs jeder Führungsleiste nur
ein oder zwei Gleitstücke vorgesehen sind, wird die
Fensterscheibe nicht über ihre ganze Höhe an die Dichtung angedrückt. Hierdurch wird deren Wirkung insbesondere dann vermindert, wenn im Fahrzeuginnenraum ein gewisser Überdruck herrscht, durch den die Fensterscheiben
nach außen gedrückt werden können. Außerdem werden bei
dieser Scheibenführung die Fahrgeräusche nicht wirkungsvoll gegenüber dem Fahrzeuginnenraum gedämmt.

Aufgabe der Erfindung ist es, die Führung einer außenhautbündigen Fensterscheibe der eingangs genannten Art
so auszubilden, daß bei vertretbarem Fertigungsaufwand
eine optimale Dichtwirkung und gute Schalldämmung erreicht wird, wobei die Scheibenführung auch in stilistischer Hinsicht den heute an eine außenhautbündige Fensterscheibe gestellten Anforderungen gerecht werden soll.

Zur Lösung dieser Aufgabe sind die im kennzeichnenden
Teil des Anspruchs 1 angegebenen Gestaltungsmerkmale
vorgesehen.

Eine sich einstückig über die Länge eines Scheibenrandes
erstreckende Halterung kann unter Erzielung einer hohen
Haftkraft maßgenau mit der Fensterscheibe verklebt werden. Ferner besteht zwischen dem Scheibenrand, der Halterung und der Führungsfläche des Fensterrahmens eine

- 3 -                              0065336

Labyrinthdichtung, die Luftpolster einschließt, so daß
die Fahrgeräusche gegenüber dem Fahrzeuginnenraum gut
gedämmt werden. Darüber hinaus sind die Halterungen
samt der zugeordneten Dichtung auch in optischer Hinsicht sehr wirkungsvoll und im Betriebseinsatz kaum
störanfällig. Schließlich wird durch die erfindungsgemäße Anordnung der Fensterscheibe der Cw-Wert verbessert.

In Ausgestaltung der Erfindung ist vorgesehen, daß sich
die Halterungen an zwei einander gegenüberliegenden,
etwa senkrecht verlaufenden Scheibenrändern befindet.
Hierdurch wird die Fensterscheibe über ihre ganze Höhenerstreckung rahmenfest gehalten. Ferner wird durch die
Halterung gemäß den Merkmalen der Ansprüche 6 und 7 der
Scheibenrand kaum störend beeinflußt.

Weitere Ausgestaltungen der Erfindung sind in den Unteransprüchen gekennzeichnet.

Mehrere Ausführungsbeispiele der Erfindung sind in den
Zeichnungen dargestellt. Es zeigt:

- Fig. 1 bis Fig. 1d jeweils den obenliegenden Bereich
  einer Personenkraftwagentüre mit einem Fensterrahmen,

- Fig. 2 einen Schnitt längs der Linie II-II in Fig. 1,

- Fig. 3 einen Schnitt längs der Linie III-III in Fig. 1,

- Fig. 4 einen Schnitt längs der Linie IV-IV in Fig. 1a,

- Fig. 5 einen Schnitt längs der Linie V-V in Fig. 1a,

- Fig. 6 einen Schnitt längs der Linie VI-VI in Fig. 1b,

- Fig. 7 einen Schnitt längs der Linie VII-VII in Fig.1b,

- Fig. 8 einen Schnitt längs der Linie VIII-VIII in Fig.1b,

- Fig. 9 einen Schnitt längs der Linie IX-IX in Fig. 1b,

- Fig.9a einen Schnitt längs der Linie IX-IX in Fig. 1b
  jedoch gegenüber Fig. 9 mit tieferliegenderer Fensterscheibe,

- Fig.10 einen Schnitt längs der Linie X-X in Fig. 1c,

- Fig.11 einen Schnitt längs der Linie XI-XI in Fig. 1c,

- Fig.12 einen Schnitt längs der Linie XII-XII in Fig.1c,

- Fig.13 einen Schnitt längs der Linie XIII-XIII in Fig.1d,

- Fig.14 einen Schnitt längs der Linie XIV-XIV in Fig. 1d,

- Fig.15 einen Schnitt längs der Linie XV-XV in Fig. 1d,

- Fig.15a einen Schnitt längs der Linie XV-XV in Fig.1d
  jedoch gegenüber Fig. 15 mit tieferliegenderer Fensterscheibe,

- Fig.16 einen Schnitt längs der Linie XVI-XVI in Fig. 15.

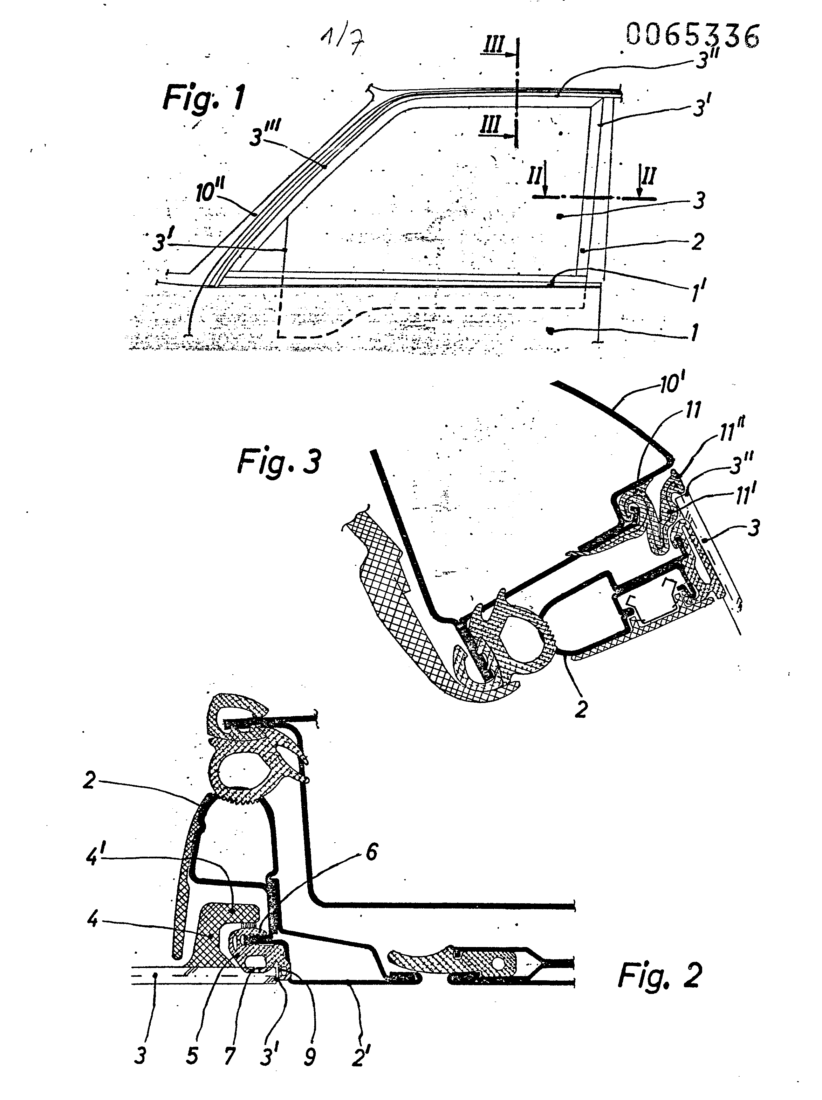

Die in den Figuren 1 bis 1d dargestellte Türe 1 eines Personenkraftwagens hat einen Fensterrahmen 2, in dem eine
höhenverschiebbar geführte Fensterscheibe 3 so angeordnet
ist, daß ihre außenliegende Oberfläche mit der außenliegenden Oberfläche des Rahmens 2 und der angrenzenden Außenhaut des Personenkraftwagens (Teile des Fahrzeugaufbaus 10, Dachrahmen 10', A-Säule 10") bündig ist.

Beim Ausführungsbeispiel nach den Figuren 1 und 1c ist auf die innenliegende Oberfläche der Fensterscheibe 3 eine aus transparentem Kunststoff bestehende und ein winkelförmiges Querschnittsprofil aufweisende Halterung 4 derart aufgeklebt, daß ihr Querschnittsprofil zusammen mit dem Randbereich der Fensterscheibe 3 ein zu deren Rand hin offenes U bildet. Bei der Fensterscheibe 3 gemäß Fig. 1 erstreckt sich die Halterung 4 als ein einstückig ausgebildetes Profilteil längs zwei senkrecht verlaufenden Scheibenrändern 3', während sie bei der in Fig. 1c dargestellten Fensterscheibe 3 sowohl an den zwei senkrecht verlaufenden Scheibenrändern 3' als auch am obenliegenden, waagrecht und schräg verlaufenden Scheibenrand 3", 3"' vorgesehen ist. Der parallel und im Abstand zur Ebene der Fensterscheibe 3 verlaufende Schenkel 4' der Halterung 4 hintergreift unter Zwischenlage einer Dichtung 5 eine am Fensterrahmen 2 umlaufend ausgebildete Führungsfläche 6, wodurch die Fensterscheibe 3 über ihre gesamte Höhenerstreckung rahmenfest gehalten ist. Durch die an den obenliegenden Rändern 3", 3'" der Fensterscheibe 3 angeordnete Halterung 4, bzw. die im folgenden erörterte Halterung 40 (Fig.1b, Fig.1c, Fig. 1d, Fig.7, Fig.11, Fig.14), wird die Fensterscheibe 3 auch in ihrer Schließstellung - in der der Schenkel 4', 40' der Halterung 4, 40 die Führungsfläche 6 hintergreift - rahmenfest gehalten.

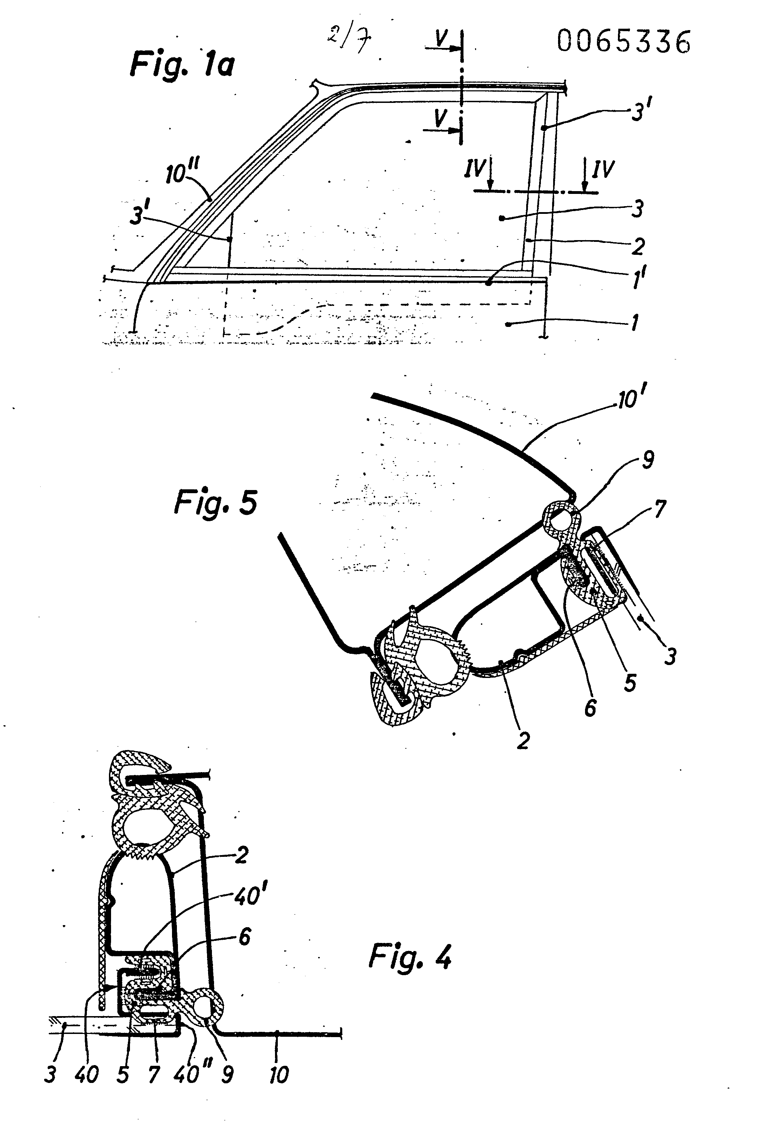

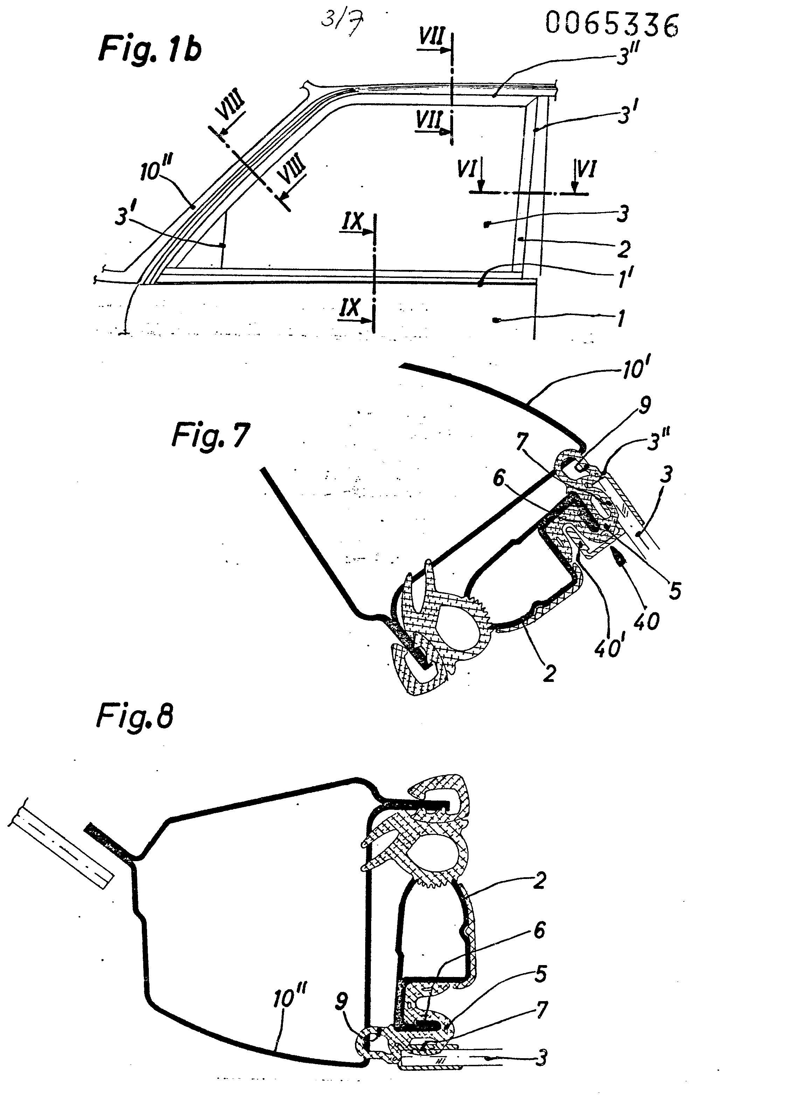

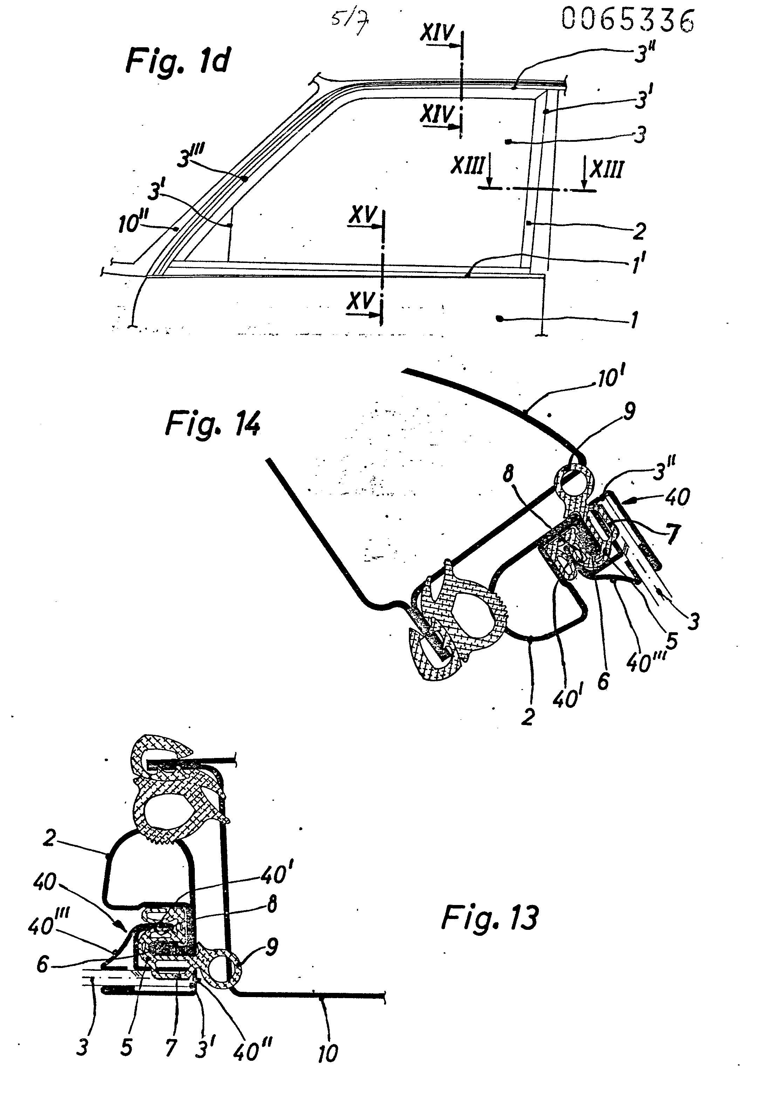

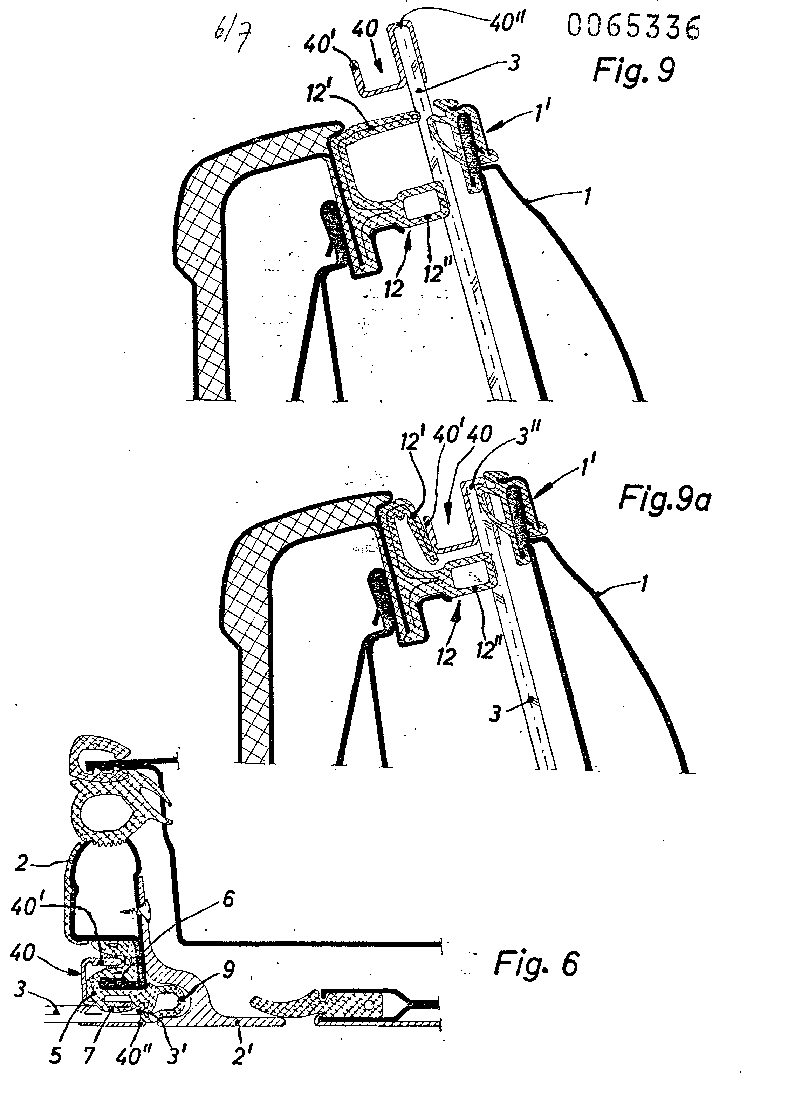

Wie die Figuren 2, 4 bis 8, 10, 11, 13, 14 zeigen, wirkt die am Fensterrahmen 2 angebrachte Dichtung 5, welche sich längs den senkrecht, waagrecht und schräg verlaufenden Rändern 3', 3", 3'" der Fensterscheibe 3 erstreckt
und aus gummielastischem Material besteht, sowohl mit
der Halterung 4 bzw. 40 als auch mit dem zugewandten
innenliegenden Rand der Fensterscheibe 3 zusammen. Hierfür ist die Dichtung 5 auf ihrer der Innenfläche der
Fensterscheibe 3 zugewandten Anlageseite mit einem
schlauchförmigen Dichtwulst 7 versehen; ferner kann
auch die der Halterung 40 (oder auch der Halterung 4)
zugekehrte Anlageseite (Fig.13 und 14) einen schlauchförmigen Dichtwulst 8 aufweisen. Damit die Fensterscheibe 3 auch gegenüber den benachbart liegenden Teilen des
Fahrzeugaufbaus 10 und dem Dachrahmen 10' (Fig.4, 5, 7,
8, 10, 11, 13, 14) bzw. des Seitenteils 2' des Fensterrahmens 2 (Fig. 2 und Fig. 6) abgedichtet wird, ist
die Dichtung 5 darüber hinaus an ihrer diesen Teilen
zugewandten Umfangsseite mit einem schlauchförmigen
Dichtwulst 9 versehen, der in Schließstellung der Fahrzeugtüre 1 und der Fensterscheibe 3 am Fahrzeugaufbau
10 (z.B.Fig.4 und 5) bzw. - wie Fig.2 und 6 zeigt - beim
Einbau der Fensterscheibe 3 an einem Seitenteil 2" des
Fensterrahmens 2 mit Vorspannung anliegt.

Die in den Figuren 4, 7, 13 und 14 ersichtliche, aus
Stahl oder Leichtmetall bestehende Halterung 40 weist
ein S-förmiges Querschnittsprofil auf, wobei der aussenliegende, einen relativ schmalen Steg aufweisende
Profilabschnitt 40" durch Klemm- und/oder Klebewirkung
mit der Fensterscheibe 3 verbunden ist; der innenliegende Profilabschnitt 40' hintergreift dagegen die Führungsfläche 6 des Fensterrahmens 2. Die Halterung 40
kann lackiert oder galvanisiert, insbesondere verchromt
sein.

Befinden sich an der Fensterscheibe 3 lediglich senkrecht verlaufende Halterungen 4 (Fig.1), so kann auch
am Dachrahmen 10' eine Dichtung 11 mit nach oben offenem V-förmigem Querschnittsprofil angebracht sein (Fig.
3). Diese liegt mit ihrem außenliegenden Rand in Schließstellung der Fensterscheibe 3 am zugewandten Scheibenrand 3'', 3''' so an, daß sie sowohl mit deren Außenfläche als auch mit der Oberfläche des Dachrahmens 10' und
der der A-Säule 10'' etwa bündig ist. Die Dichtung 11 ist
mit einer federnden Stahleinlage 11' versehen, durch die
der außenliegende Schenkel 11'' der Dichtung 11 bei geöffneter Fahrzeugtüre 1
durch Eigenspannung nach außen verlagert und dadurch vom
Fahrzeugdach abfließendes Wasser nach vorne, in den Bereich des Spiegeldreiecks abgeleitet wird.

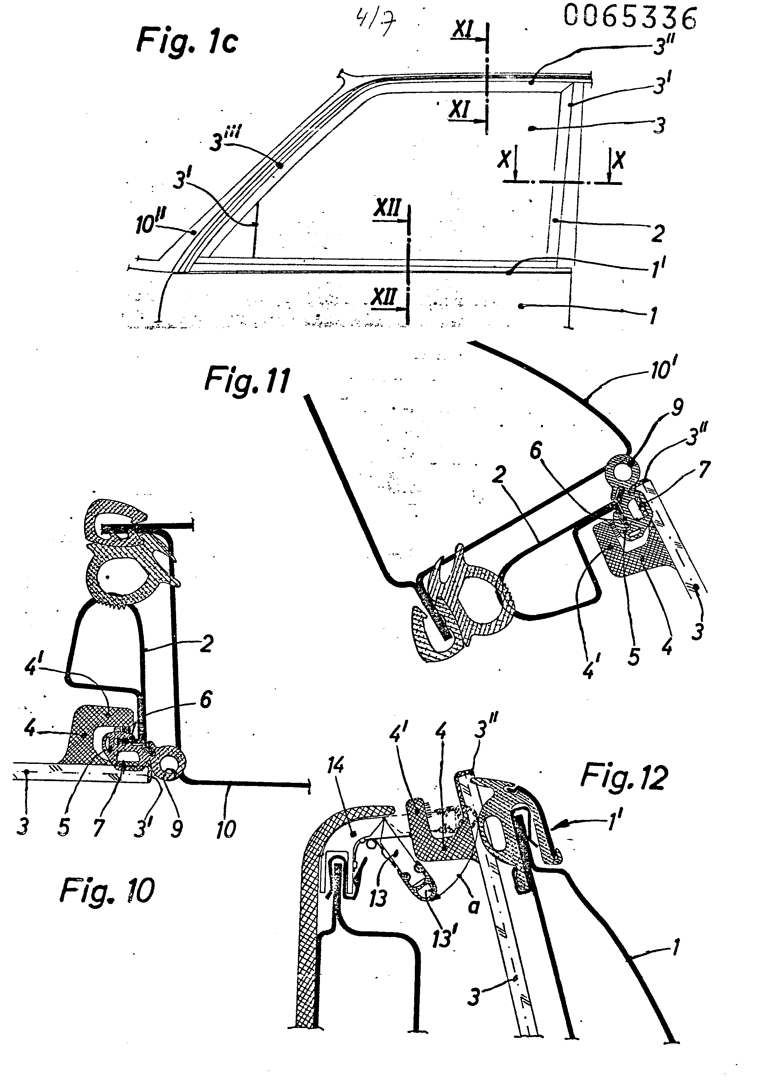

Falls die Fensterscheibe 3 an ihrem obenliegenden, waagrecht                verlaufenden Rand 3''        mit einer
Halterung 4, 40 versehen ist (Fig.1b)          muß die
längs der Türbrüstung 1' verlaufende, mit der Fensterscheibe 3 zusammenwirkende Dichtung 12, Dichtlippe 13
bzw. Dichtanordnung 15 so ausgebildet sein, daß sie ein
vollständiges Öffnen der Fensterscheibe 3 ermöglicht,
also deren Rand 3'' bis zur Oberkante der Türbrüstung 1'
in den Fensterschacht eintauchen kann. Die in den Figuren 9 und 9a dargestellte, aus gummielastischem Material
bestehende Dichtung 12 hat hierfür ein U-förmiges Querschnittsprofil, dessen beide lotrecht übereinander liegende Schenkel 12', 12'' der Innenfläche der Fensterscheibe 3 zugewandt sind. Durch eine am Grundbereich des obenliegenden Schenkels 12' vorgesehene Sollknickstelle wird
dieser in tiefstliegender Offenstellung der Fensterscheibe 3 (bei der der Rand 3'' der Fensterscheibe 3 mit der Oberkante der Türbrüstung 1 etwa auf gleicher Höhe
liegt) vom innenliegenden Profilabschnitt 40' der Halterung 40 abwärts geschwenkt (Fig.9a), während der
untenliegende, als ein schlauchförmiger Dichtwulst ausgebildete Schenkel 12" dabei stets an der Innenfläche
der Fensterscheibe 3 anliegt.

Wie in Fig. 12 ersichtlich, kann längs der Türbrüstung 1'
auch eine Dichtlippe 13 angeordnet sein, die über ein
Scharnier an einem Befestigungsteil 14 angelenkt und
durch die Halterung 4 der Fensterscheibe 3 gegen die
Wirkung einer Feder abwärts schwenkbar ist (Pfeilrichtung a). Der an der Innenfläche der Fensterscheibe 3
anliegende Endabschnitt der Dichtlippe 13 trägt einen
schlauchförmig ausgebildeten Dichtwulst 13' (insbes.Fig.1c u.1d)

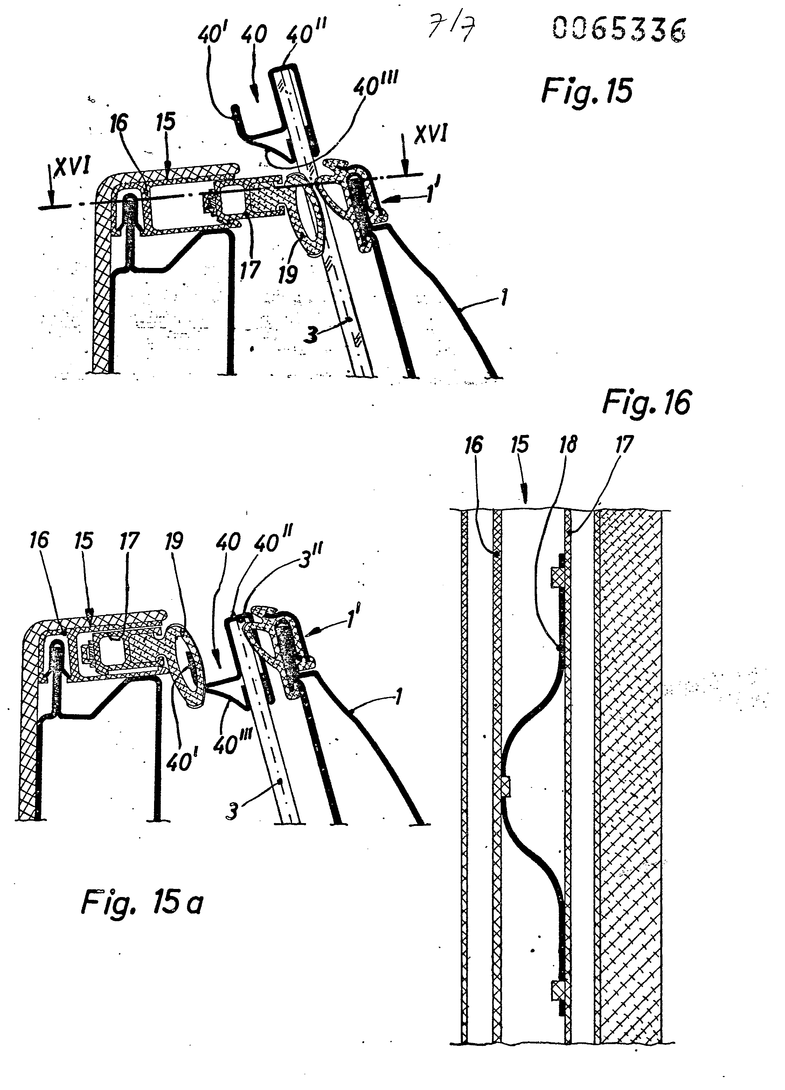

Beim Ausführungsbeispiel nach den Figuren 15 und 15a
verläuft längs der Türbrüstung 1' eine Dichtanordnung
15, welche aus einem etwa senkrecht zur Ebene der Fensterscheibe 3 angeordneten Aufnahmeteil 16 und einem
Tragteil 17 besteht, das im Aufnahmeteil 16 gegen die
Wirkung wenigstens einer Feder 18 schubladenartig verschiebbar ist. Die aus Metall oder Kunststoff bestehende Feder 18 ist membranförmig gestaltet (Fig.16) und
sowohl mit dem Aufnahmeteil 16 als auch dem Tragteil 17
verbunden. Dieses trägt einen schlauchförmigen Dichtwulst 19, der in Ruhelage des Tragteils 17 an der Innenfläche der Fensterscheibe 3 mit Vorspannung anliegt.
Der innenliegende Profilabschnitt 40' der Halterung 40
hat an seiner Unterseite eine Anlaufschräge 40'" die
in tiefstliegender Offenstellung der Fensterscheibe 3
derart mit dem Dichtwulst 19 zusammenwirkt, daß wie Fig.15a zeigt - hierdurch das Tragteil 17 in das Aufnahmeteil
16 schubladenartig hineingeschoben wird (Fig. 1b, 1c,
1d).

0065336

- 1 -

Patentansprüche:

1. Kraftfahrzeug, insbesondere Personenkraftwagen, mit
   wenigstens einer außenhautbündigen Fensterscheibe,
   die in einem Rahmen höhenverschiebbar geführt
   ist, wobei am Randbereich der Fensterscheibe befestigte Halterungen im Abstand zu deren Ebene jeweils
   eine im Fensterrahmen ausgebildete Führungsfläche
   hintergreifen, dadurch gekennzeichnet, daß die Halterung (4, 40) als ein sich einstückig längs wenigstens eines Scheibenrandes (3', 3", 3"') erstreckendes Profilteil ausgebildet ist, wobei der Fensterrahmen (2) eine mit der Halterung und/oder dem zugewandten Randbereich der Fensterscheibe (3) zusammenwirkende Dichtung (5) trägt.

2. Kraftfahrzeug nach Anspruch 1, dadurch gekennzeichnet, daß die Halterung (4, 40) an wenigstens einem
   senkrecht verlaufenden Scheibenrand (3') vorgesehen
   ist.

3. Kraftfahrzeug nach Anspruch 1, dadurch gekennzeichnet, daß sich die Halterung (4, 40) an zwei einander gegenüberliegenden, etwa senkrecht verlaufenden
   Scheibenrändern (3') befindet.

0065336

4. Kraftfahrzeug nach Anspruch 3, dadurch gekennzeichnet, daß die Halterung (4, 40) auch an einem etwa waagrecht verlaufenden, obenliegenden Scheibenrand (3") angeordnet ist.

5. Kraftfahrzeug nach Anspruch 1, dadurch gekennzeichnet, daß die Halterung (4, 40) an den seitlichen (3') und obenliegenden Scheibenrändern (3", 3"') vorgesehen ist.

6. Kraftfahrzeug nach Anspruch 1, dadurch gekennzeichnet, daß die Halterung (4) ein winkelförmiges Querschnittsprofil aufweist und aus Metall oder Kunststoff besteht, wobei die so ausgebildete Halterung derart auf die innenliegende Scheibenoberfläche aufgeklebt ist, daß ihr Querschnittsprofil zusammen mit dem Randbereich der Fensterscheibe (3) ein zum Scheibenrand hin offenes U bildet.

7. Kraftfahrzeug nach Anspruch 6, dadurch gekennzeichnet, daß die Halterung (4) aus transparentem Kunststoff besteht.

8. Kraftfahrzeug nach Anspruch 1, dadurch gekennzeichnet, daß die Halterung (40) ein S-förmiges Querschnittsprofil aufweist, wobei der außenliegende, einen relativ schmalen Steg aufweisende Profilabschnitt (40") mit dem Scheibenrand durch Klemm- und/oder Klebewirkung verbunden ist, während der innenliegende Profilabschnitt (40') die Führungsflächen (6) des Fensterrahmens (2) hintergreift.

9. Kraftfahrzeug nach Anspruch 1, dadurch gekennzeichnet, daß die am Fensterrahmen (2) angebrachte, mit der Halterung (4, 40) und dem zugewandten Randbereich der Fensterscheibe (3) zusammenwirkende Dichtung (5)
derart auszubilden ist, daß sie ferner mit jeweils
benachbart liegenden Teilen des Fahrzeugaufbaus (10,
[Dachrahmen 10', A-Säule 10"] ), sowie des Fensterrahmens (Seitenteil 2') zusamenwirkt.

10. Kraftfahrzeug nach Anspruch 9, dadurch gekennzeichnet,
daß die Dichtung (5) auf ihrer der Scheibenfläche zugewandten Anlageseite einen schlauchförmigen Dichtwulst (7) aufweist.

11. Kraftfahrzeug nach Anspruch 9, dadurch gekennzeichnet,
daß die Dichtung (5) auf ihrer der Scheibenfläche und
der Halterung (4, 40) zugewandten Anlageseite, sowie
an ihrer den Teilen des Fahrzeugaufbaus (10, [Dachrahmen 10', A-Säule 10"] ) bzw. des Fensterrahmens (2,
[Seitenteil 2']) zugekehrten Umfangsseite jeweils mit
einem schlauchförmigen Dichtwulst (7, 8, 9) versehen
ist.

12. Kraftfahrzeug nach den Ansprüche 1 bis 3, dadurch gekennzeichnet, daß bei einer Fensterscheibe (3), die
lediglich mit senkrecht verlaufenden Halterungen (4,
40) versehen ist, sich am Dachrahmen (10') eine Dichtung (11) mit nach oben offenem V-förmigen Querschnittsprofil befindet, die derart an dem zugewandten oberen Scheibenrand (3", 3"') anliegt, daß ihr
außenliegender Rand in Schließstellung der Fensterscheibe sowohl mit deren Außenfläche als auch mit der
Außenfläche des Dachrahmens (10') und der A-Säule (10")
bündig ist.

13. Kraftfahrzeug nach den Ansprüche 4 oder 5, dadurch gekennzeichnet, daß an der Türbrüstung (1') eine sich längs dieser erstreckende, aus gummielastischem Material bestehende Dichtung (12) mit U-förmigem Querschnittsprofil vorgesehen ist, dessen beide Schenkel (12', 12") übereinander liegen und der Innenfläche der Fensterscheibe (3) zugewandt sind, wobei der obenliegende Schenkel (12')       abwärts schwenkbar ist, während der untenliegende, als ein schlauchförmiger Dichtwulst ausgebildete Schenkel (12") an der Fensterscheibe anliegt.

14. Kraftfahrzeug nach den Ansprüchen 4 oder 5, dadurch gekennzeichnet, daß an der Türbrüstung (1') eine sich längs dieser erstreckende Dichtlippe (13) angeordnet ist, die an einem Befestigungsteil (14) über ein Scharnier angelenkt und gegen die Wirkung einer Feder abwärts schwenkbar ist, wobei der vordere, an der Fensterscheibe (3) anliegende Endabschnitt der Dichtlippe einen schlauchförmig ausgebildeten Dichtwulst (13') aus gummielastischem Material trägt.

15. Kraftfahrzeug nach den Ansprüche 4 oder 5, dadurch gekennzeichnet, daß an der Türbrüstung (1') eine sich längs dieser erstreckende, aus gummielastischem Material bestehende Dichtanordnung (15) befindet, die aus einem etwa senkrecht zur Ebene der Fensterscheibe (3) angeordneten Aufnahmeteil (16) und einem in dieses eingesetzten, gegen Federwirkung schubladenartig verschiebbaren Tragteil (17) besteht, das mit einem in seiner Ruhelage an der Fensterscheibe anliegenden, schlauchförmigen Dichtwulst (19) versehen ist.

16. Kraftfahrzeug nach Anspruch 15, dadurch gekennzeichnet, daß zwischen Aufnahmeteil (16) und Tragteil (17)
wenigstens eine membranförmig gestaltete, mit den
beiden Teilen verbundene Feder (18) eingesetzt ist,
die aus Metall oder Kunststoff besteht.

Fig. 1

Fig. 3

Fig. 2

0065336

1/7

**Fig. 1a**

**Fig. 5**

**Fig. 4**

0065336

**Fig. 1b**

**Fig. 7**

**Fig. 8**

**Fig. 1c**

4/7

**Fig. 11**

**Fig. 10**

**Fig. 12**

**Fig. 1d**

**Fig. 14**

**Fig. 13**

*Fig. 9*

*Fig.9a*

*Fig. 6*

0065336

6/7

Fig. 15

Fig. 15 a

Fig. 16

**Europäisches Patentamt**

**EUROPÄISCHER RECHERCHENBERICHT**

0065336
Nummer der Anmeldung

EP 82 20 0547.6

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl ) |
|---|---|---|---|
| X | DE - A1 - 2 847 404 (GEBR. HAPPICH) <br> * Fig. 2, 3 * <br> -- | 1-4 | B 60 J 1/17 |
| X | DE - A1 - 2 826 949 (AUDI NSU AUTO UNION) <br> * Fig. 3, Position 39 * <br> -- | 1,2, 6,8 | |
| P,X | EP - A1 - 0 040 588 (S.I.R.P.) <br> * Anspruch 1; Fig. 1 bis 3 * <br> -- | 1,2 | |
| D,X | DE - B1 - 2 809 721 (AUDI NSU AUTO UNION) <br> * Spalte 2, Zeilen 16 bis 26; Fig. 1, 2a, 2b * <br> -- | 1,2 | **RECHERCHIERTE SACHGEBIETE (Int. Cl )** <br><br> B 60 J 1/17 <br> B 60 R 13/06 |
| D,A | DE - C - 701 412 (F.E. MAIER) <br> ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 08-07-1982 | BECKER |

EPA form 1503.1   06.78